# EUROPEAN PATENT APPLICATION

(11) **EP 2 669 576 A2**
(43) Date of publication of application: **04.12.2013**
(21) Application number: 13169761.7
(22) Date of filing: 29.05.2013
(51) Int. Cl.: F23L 15/00

(54) **Boiler**

(30) Priority: 29.05.2012 JP 2012121630
(71) Applicant: Hitachi Ltd., Tokyo 100-8280 (JP)
(72) Inventor: Handa, Masato, Tokyo, 100-8220 (JP); Hayashi, Yoshiharu, Tokyo, 100-8220 (JP); Shibata, Tsuyoshi, Tokyo, 100-8220 (JP)
(74) Representative: Beetz & Partner

(57) **Abstract**

A boiler (1), in which the secondary air temperature can be efficiently increased for higher thermal efficiency by appropriately reducing the heat transfer area of the boiler while maintaining the heat collection of steam in the whole boiler, is disclosed. In the boiler, a heat exchanger (16, 17) provided in one of two flow paths formed by partitioning a downstream portion of a flow path for exhaust gas discharged from a furnace (23) has a smaller total heat transfer area than a heat exchanger (20) provided in the other of the two flow paths; the exhaust gases discharged from the flow paths to outside the boiler (1) are introduced, without being mixed, into an air heater (2) downstream of the boiler (1); and, in the air heater (2), the heat of the exhaust gases is transferred to the primary air and the secondary air so as to heat combustion air.

## Description

### [Technical Field]

The present invention relates to a boiler and, more particularly, to a boiler in which fuel is burned to generate high-temperature steam for driving a steam-turbine power generation facility and which is suitably applicable to thermal power generation.

### [Background Art]

Generally, at a thermal power generation plant where fuel is burned to generate steam using a boiler, a means for recovering heat from the exhaust gas discharged from the boiler is used to improve thermal efficiency.

Among thermal power generation plants where coal is used as fuel, in particular, a technique is widely used in which an air heater is provided on a gas duct coupled to the boiler outlet, combustion air is heated using the heat of exhaust gas, and the heated combustion air is supplied to the boiler to promote burning of fuel so as to improve thermal efficiency of the boiler.

In Patent Literature 1 (JP-ANo.2008-145007), for example, a technique is disclosed in which a boiler includes a temperature detector for detecting the temperature of primary air, a primary air temperature adjusting means for adjusting the temperature of primary air, and a control device for controlling the primary air temperature adjusting means based on the temperature detected by the temperature detector so as to keep the temperature of the primary air at a predetermined level and in which the ignitability and combustibility of coal is stabilized by adjusting the combustion air temperature according to the quality of coal.

In Patent Literature 2 (International Publication No. WO 94/02784), a device is disclosed which allows gases of different temperatures to flow through two systems of flow paths without leaking and which allows flow path switching. The device described as being applied to a boiler includes two fixed chambers which are coupled to each other via a partition wall and which are provided in two systems of flow paths whose flow directions are fixed. In this configuration, exhaust gas from the boiler is, after being introduced into a downstream changeover chamber, made to enter a fixed chamber to be heated by heat storage material therein and is subsequently guided to the upstream side.

According to Patent Literature 2, no gas leakage occurs between the two systems of flow paths and the device with a simple construction enables flow path switching at high speed. This makes it possible to improve the performance of an air heater to thereby improve the thermal efficiency of the whole plant.

### [Citation List]

### [Patent Literature]

[Patent Literature 1] JP-A No. 2008-145007
[Patent Literature 2] International Publication No. WO 94/02784

### [Summary of Invention]

### [Technical Problem]

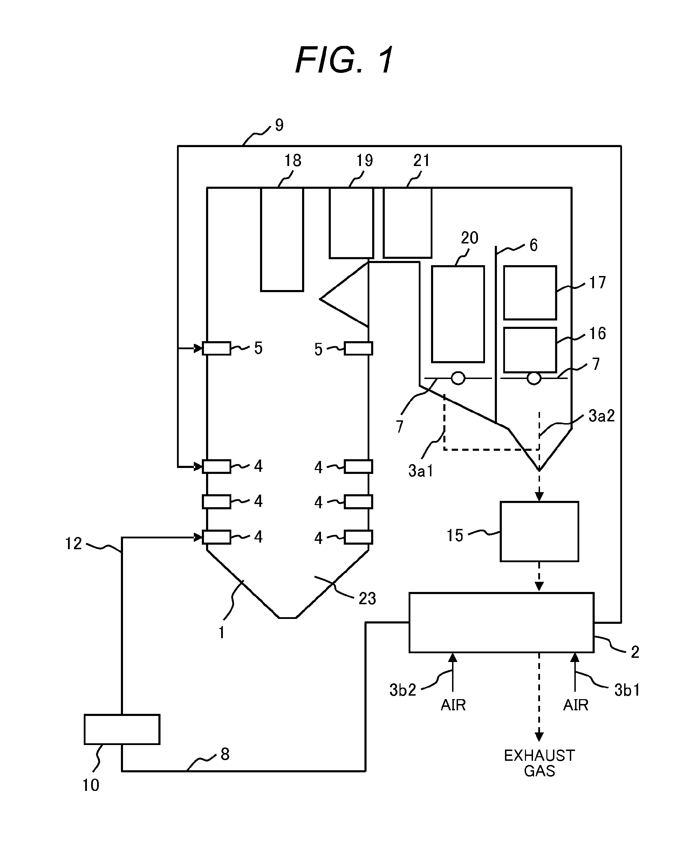

The problem to be solved by the present invention will be described below with reference to FIG. 1.

Generally, for existing types of coal-fired boilers used in thermal power generation plants, a two-staged combustion method is used to suppress the generation of nitrogen oxide caused when coal is burned.

In the two-staged combustion method, air is fed to a boiler through two systems, i.e. a primary air system for feeding fuel and a secondary air system for promoting fuel combustion. The primary air is fed with an excess air ratio smaller than 1 and undergoes primary combustion on a rich fuel side. This is to prevent the nitrogen compound generated by thermal decomposition from being converted into nitrogen oxide and to promote, using the secondary air, burning of unburned coal components and decomposition of nitrogen compound.

As shown in FIG. 1, the primary and the secondary air are heated, using the heat of exhaust gas from a boiler 1, at an air heater 2 provided at the exhaust gas outlet of the boiler 1. Generally, the exhaust gas temperature is set to about 350°C on the air heater 2 inlet side and to about 130°C on the air heater 2 outlet side.

Also, in many cases, to keep the reheat steam temperature at a desired level, a downstream flow path portion for exhaust gas (i.e. a portion around an economizer 16, a primary superheater 17 and a primary reheater 20 shown in a right-hand part of FIG. 1) is partitioned by a partition wall 6; the partitioned flow path formed on each side of the partition wall 6 is provided, at a downstream part thereof, with a damper 7 for adjusting the exhaust gas flow through the partitioned flow path so as to eventually adjust the heat collection of the primary reheater 20 and the final reheater 21. This configuration is generally designed such that the exhaust gas temperatures at around the outlets of the respective flow paths are equal.

In recent years, in attempts to further improve the thermal efficiency of power generation systems, various measures are adopted. In one of such measures, for example, the secondary air is heated to a higher temperature. Generally, the secondary air temperature is set to about 330°C. By further raising the secondary air temperature, unburned components can be further reduced to improve the thermal efficiency of the boiler 1.

As described in the foregoing, however, the exhaust gas temperature at the outlet of an existing type of boiler 1 is about 350°C, whereas the temperature to which air can be heated by the air heater 2 is about 330°C at the highest. To further raise the air temperature, it is necessary to raise the exhaust gas temperature by appropriately reducing the heat transfer area of the boiler 1 while maintaining the heat collection of steam in the whole boiler. Generally, to adjust the heat transfer area of the boiler, the heat transfer area of heat exchangers such as the economizer 16, primary superheater 17, and primary reheater 20 provided in an exhaust gas downstream portion are adjusted.

Reducing the heat transfer area of the primary superheater 17 or the economizer 16 provided in the exhaust gas downstream portion causes the exhaust gas temperature to rise on the right side of the partition wall 6, shown in FIG. 1, resulting in generating a large temperature difference between the two sides of the partition wall 6. Namely, whereas the exhaust gas temperature at around the flow path outlet on the left side of the partition wall 6 is comparable to that in an existing type of boiler, the exhaust gas temperature at around the flow path outlet on the main steam side (on the right side of the partition wall 6) becomes about 500°C.

Hence, when the exhaust gases from both flow paths are mixed as they are, the resultant exhaust gas temperature becomes about 420°C. Thus, in existing types of boilers, the secondary air temperature cannot be largely increased.

An object of the present invention is to provide a boiler in which the secondary air temperature can be efficiently increased for higher thermal efficiency by appropriately reducing the heat transfer area of the boiler while maintaining the heat collection of steam in the whole boiler.

### [Solution to Problem]

To achieve the above object, a boiler according to the present invention includes: a furnace for burning solid fuel; a fuel mill for pulverizing the solid fuel; a solid fuel feeding pipe for conveying the solid fuel from the fuel mill to the furnace; a burner for igniting the solid fuel; an air port for introducing air into the furnace; an air heater for recovering heat from exhaust gas and heating primary air and secondary air to be supplied to the furnace; a primary combustion air supply duct for introducing the primary air from the air heater to the fuel mill; a secondary combustion air supply duct for introducing the secondary air from the air heater into the burner and the air port; an air duct for introducing air into the air heater; an exhaust gas duct for introducing exhaust gas into the air heater; a partition wall for partitioning a downstream portion of a flow path for exhaust gas discharged from the furnace; and a plurality of heat exchangers which are provided in the flow paths formed on both sides of the partition wall, recover heat from the exhaust gases flowing through the flow paths and heat steam using the recovered heat. In the boiler: the heat exchanger provided in the flow path on a first side of the partition wall has a smaller total heat transfer area than the heat exchanger provided in the flow path on a second side of the partition wall; the exhaust gases discharged from the flow paths to outside the boiler are introduced, without being mixed, into the air heater downstream of the boiler; and the heat of the exhaust gases is transferred to the primary air and the secondary air in the air heater so as to heat combustion air.

### [Advantageous Effects of Invention]

In a boiler according to the present invention, the secondary air temperature can be efficiently increased by appropriately reducing the heat transfer area of the boiler while maintaining the heat collection of steam in the whole boiler. This makes it possible to burn unburned components to improve the thermal efficiency of the boiler.

### [Brief Description of Drawings]

FIG. 1 is a diagram showing the configuration of an existing type of boiler.
FIG. 2 is a diagram showing the configuration of a coal-fired boiler according to a first embodiment of the present invention.
FIG. 3 is a diagram schematically showing a rotary heat storage material type heat exchanger used as an air heater in the first embodiment of the boiler according to the present invention.
FIG. 4 is a diagram showing the configuration of a coal-fired boiler according to a second embodiment of the present invention.
FIG. 5 is a diagram showing the configuration of a coal-fired boiler according to a third embodiment of the present invention.
FIG. 6 is a diagram showing the configuration of a coal-fired boiler according to a fourth embodiment of the present invention.

### [Description of Embodiments]

A boiler according to the present invention will be described below based on illustrated embodiments. In the drawings referred to in the following description, parts identical to those shown in FIG. 1 representing the configuration of an existing type of boiler are denoted by reference numerals identical to those used in FIG. 1.

### [First Embodiment]

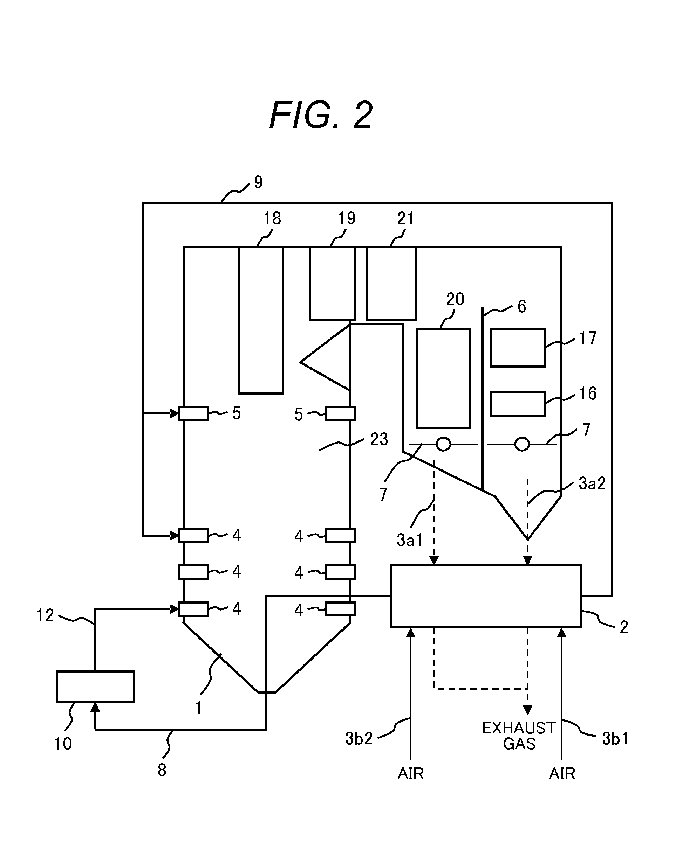

FIG. 2 shows the configuration of a coal-fired boiler according to a first embodiment of the present invention.

As shown in FIG. 2, a coal-fired boiler 1 according to the present embodiment broadly includes: a furnace 23 to burn coal, i.e. solidfuel; a fuel mill, i.e. acoalmill 10, topulverize coal; a solid fuel feeding pipe, i.e. a coal feeding pipe 12, used to feed coal from the coal mill 10 to the furnace 23; plural burners 4 used to ignite the coal in the furnace 23; air ports 5 for introducing air into the furnace 23; an air heater 2 which recovers heat from exhaust gas and heats the primary and secondary air to be supplied to the furnace 23; a primary combustion air supply duct 8 to introduce the primary air from the air heater 2 into the coal mill 10; a secondary combustion air supply duct 9 to introduce the secondary air from the air heater 2 into the burners 4 and air ports 5; air ducts 3b1 and 3b2 to introduce air into the air heater 2; exhaust gas ducts 3a1 and 3a2 to introduce exhaust gas into the air heater 2; a partition wall 6 partitioning a downstream portion of a flow path for the exhaust gas discharged from the furnace 23; and heat exchangers which, being provided in the flow paths formed on both sides of the partition wall 6, recover heat from the exhaust gases flowing through the flow paths and heat steam, the heat exchangers including an economizer 16, a primary superheater 17, a secondary superheater 18, a final superheater 19, a primary reheater 20, and a final reheater 21.

Fuel coal is supplied to the coal mill 10 to be pulverized into particles sized to be suitable for burning in the boiler 1. To the coal mill 10, the air (primary air) heated by the air heater 2 is supplied through the primary combustion air supply duct 8. The primary air dries the pulverized coal and carries the pulverized coal to outside the coal mill 10.

The pulverized coal is conveyed, together with the primary air, to the burners 4 through the coal feeding pipe 12 to be ignited and to be then fed into the boiler 1. The boiler 1 also has the secondary air supplied from the air heater 2 through the secondary combustion air supply duct 9 and via the burners 4 and air ports 5.

Burning the pulverized coal using the air heated by the air heater 2 using exhaust gas as described above causes high-temperature combustion gas to be generated in the boiler 1. The heat of the combustion gas is transferred to water or steam at a group of heat exchangers (secondary superheater 18, final superheater 19, final reheater 21, primary superheater 17, economizer 16, primary reheater 20) installed in the boiler 1 to generate high-temperature, high-pressure steam. The high-temperature, high-pressure steam is fed, through a steam pipe (not shown), to a steam turbine power generation facility (not shown) to have the energy of the steam converted into electricity therein.

The flow path for the exhaust gas is, in a downward portion thereof, partitioned into two parts by the partition wall 6. In FIG. 2, the primary reheater 20 is installed on the left side of the partition wall 6, whereas the economizer 16 and the primary superheater 17 are installed on the right side of the partition wall 6. With the primary reheater 20 having a heat transfer area comparable with that in an existing type of boiler, reducing the total heat transfer area (s) of one or both of the economizer 16 and the primary superheater 17 (for example, making the economizer 16 and/or the primary superheater 17 smaller shortens the heat transfer pipe correspondingly reducing the total heat transfer area) results in a higher exhaust gas temperature in the right-side flow path whereas the exhaust gas temperature in the left-side flow path remains about the same as in an existing type of boiler. If, for example, the heat transfer area is reduced by an area equivalent to the whole area of the economizer 16 in the present state, the temperature of the exhaust gas near the damper 7 in the right-side flow path becomes about 550°C.

In the present embodiment, the low-temperature exhaust gas flowing through the left-side flow path and the high-temperature exhaust gas flowing through the right-side flow path are introduced into the air heater 2 via separate exhaust gas ducts 3a1 and 3a2, respectively.

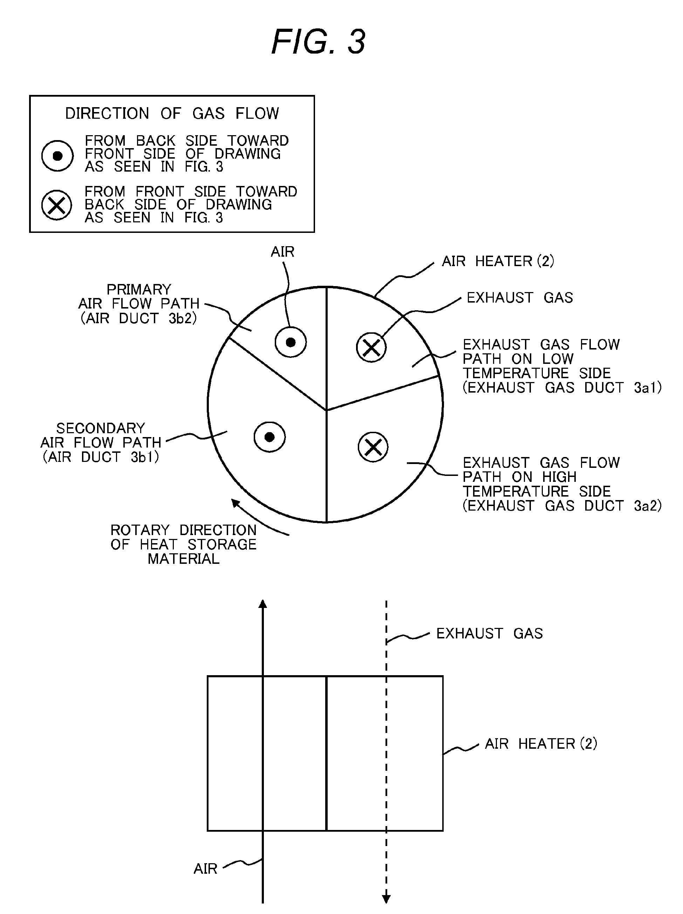

FIG. 3 schematically shows, as an exemplary configuration of the preferred air heater 2 of the present embodiment, a rotary heat storage material type heat exchanger widely used in coal-fired boilers.

In the present embodiment, to achieve efficient heat exchange, four separate gas flow paths (ducts), i.e. two each on the exhaust gas side and on the air side, are arranged, as shown in FIG. 3, along the rotary direction of the heat storage material.

Namely, the rotary heat storage material first passes the exhaust gas flow path (exhaust gas duct 3a1) on the low-temperature side to be heated by the low-temperature exhaust gas; next passes the exhaust gas flow path (exhaust gas duct 3a2) to be further heated by the high-temperature exhaust gas; and subsequently passes the secondary air flow path (air duct 3b1) and the primary air flow path (air duct 3b2) in this order to release the stored heat while passing the air ducts.

The above-described configuration of the present embodiment makes it possible to heat the secondary air up to about 500°C so as to reduce the unburned components of coal. This improves thermal efficiency of the boiler 1.

As the secondary air heated to a high temperature improves the combustion efficiency of coal, heat collection by the boiler 1 in its upstream gas flow portion increases. Therefore, even when the heat transfer area of one or both of the economizer 16 and the primary superheater 17 is reduced to be smaller than in existing types of boilers as mentioned above, heat collection by the boiler as a whole can be secured. When necessary to secure adequate heat collection by the boiler 1, the heat transfer area of the secondary superheater 18 or final superheater 19 may be increased.

### [Second Embodiment]

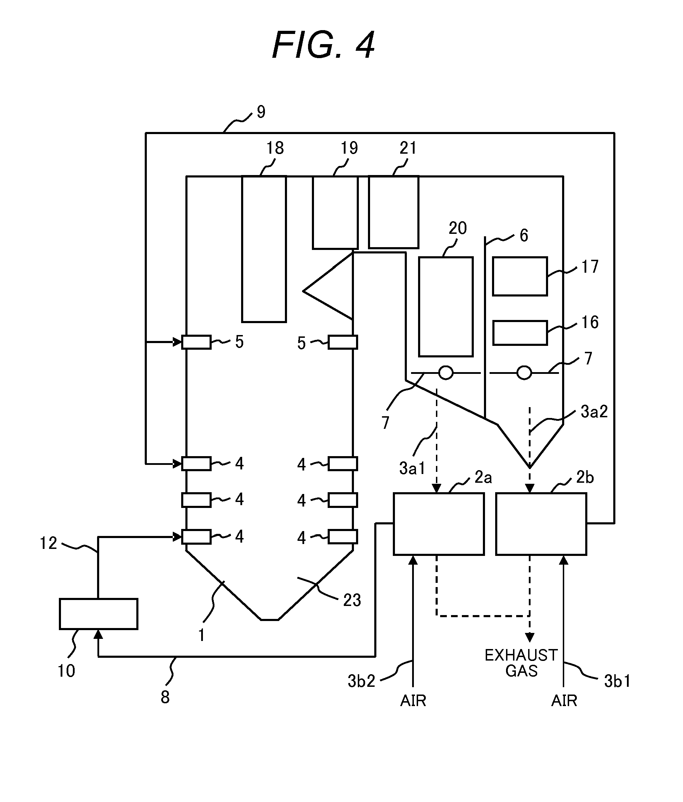

FIG. 4 shows the configuration of a coal-fired boiler according to a second embodiment of the present invention.

The boiler of the second embodiment includes many parts identical in operation to those used in the first embodiment. In the following, the boiler of the second embodiment will be described only with regard to what it differs from the boiler of the first embodiment. The parts of the boiler not described in the following are identical in operation and effects to those used in the first embodiment.

In the second embodiment, unlike in the first embodiment, two air heaters are used as shown in FIG. 4. Namely, the heat of the exhaust gas, whose temperature is about the same as in existing types of boilers, flowing through the left-side flow path downstream of the boiler is recovered by a low-temperature air heater 2a and is used to heat the primary air. The heat of the high-temperature exhaust gas flowing through the right-side flow path, on the other hand, is recovered by a high-temperature air heater 2b and is used to heat the secondary air.

The above-described configuration of the present embodiment also makes it possible to obtain the advantageous effects of the foregoing first embodiment. Furthermore, in the present embodiment, with the two separate air heaters, i.e. the low-temperature air heater 2a and the high-temperature air heater 2b, provided, itiseasytomaintainhighheat-exchangeefficiency, so that the secondary air can be stably maintained at high temperature.

It is feared that a heat exchanger of a rotary heat storage material type involves leakage between flowing gases. In the present embodiment, however, leakage occurs neither between the low-temperature and the high-temperature exhaust gas nor between the primary and the secondary air, so that stable heat exchange is realized.

### [Third Embodiment]

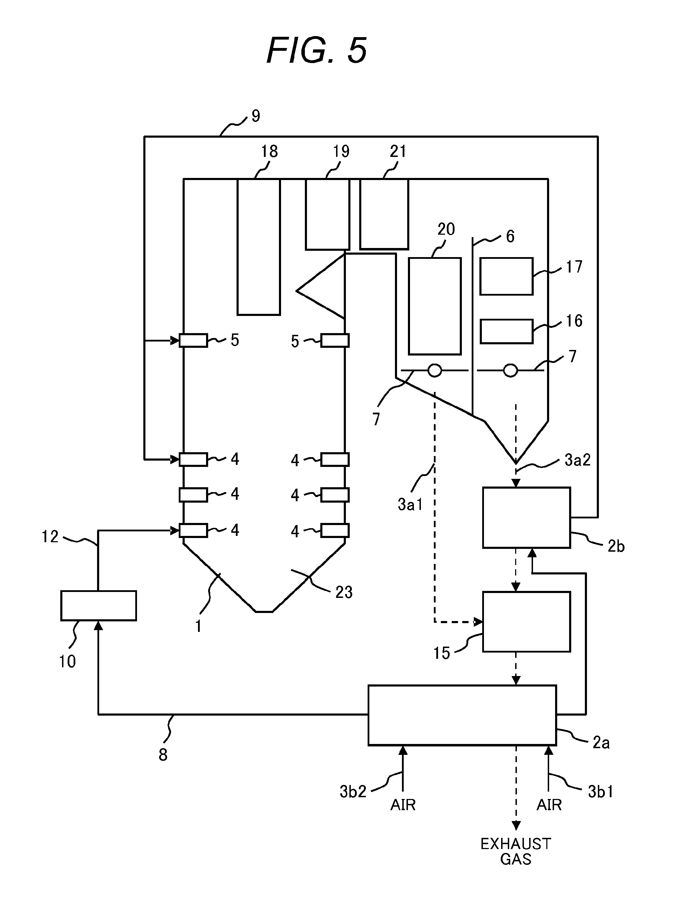

FIG. 5 shows the configuration of a coal-fired boiler according to a third embodiment of the present invention.

The boiler of the third embodiment includes many parts identical in operation to those used in the second embodiment. In the following, the boiler of the third embodiment will be described only with regard to what it differs from the boiler of the second embodiment. The parts of the boiler not described in the following are identical in operation and effects to those used in the second embodiment.

There are two differences between the present embodiment shown in FIG. 5 and the second embodiment. A first difference is that, in the present embodiment, the exhaust gas flowing through the exhaust gas flow path on the low-temperature side (exhaust gas duct 3a1) where a heat exchanger having a large heat transfer area is installed is introduced into the low-temperature air heater 2a via a de-NOx device 15 for removing nitrogen oxide contained in the exhaust gas. A second difference is that, after passing through the low-temperature air heater 2a used to heat the primary air, the secondary air is, for further heating, made to flow through the high-temperature air heater 2b along with the high-temperature exhaust gas.

Namely, the exhaust gas flowing through the exhaust gas duct 3a1 on the low-temperature side where a heat exchanger having a large heat transfer area is installed passes, before entering the low-temperature air heater 2a, the de-NOx device 15 for removing nitrogen oxide contained in the exhaust gas. At the same time, the secondary air enters, after being heated in the low-temperature air heater 2a, the high-temperature air heater 2b to be heated therein by the exhaust gas flowing through the exhaust gas duct 3a2 in which a heat exchanger having a small heat transfer area is installed.

The exhaust gas flowing through the exhaust gas duct 3a2 in which a heat exchanger having a small heat transfer area is installed enters the high-temperature air heater 2b and, after being heat-exchanged therein, enters the de-NOx device 15. In the de-NOx device 15, the exhaust gas, along with the exhaust gas flowing through the exhaust gas duct 3a1 in which a heat exchanger having a large heat transfer area is installed, has nitrogen oxide removed from it to be then introduced into the low-temperature air heater 2a.

The de-NOx device 15 used in the present embodiment is for removing nitrogen oxide contained in exhaust gas. The catalyst de-NOx device of an ammonia spray type capable of efficiently removing nitrogen oxide operates optimally at about 350°C and is normally installed on the upstream side of an air heater.

In cases where, as assumed in the present embodiment, the outlet temperature of the boiler 1 becomes 400°C or higher, the location where the de-NOx device is installed in the present embodiment is appropriate. Namely, using the configuration of the present embodiment makes it possible not only to obtain advantageous effects similar to those obtained in the foregoing second embodiment but also to maintain high performance for nitrogen oxide removal.

### [Fourth Embodiment]

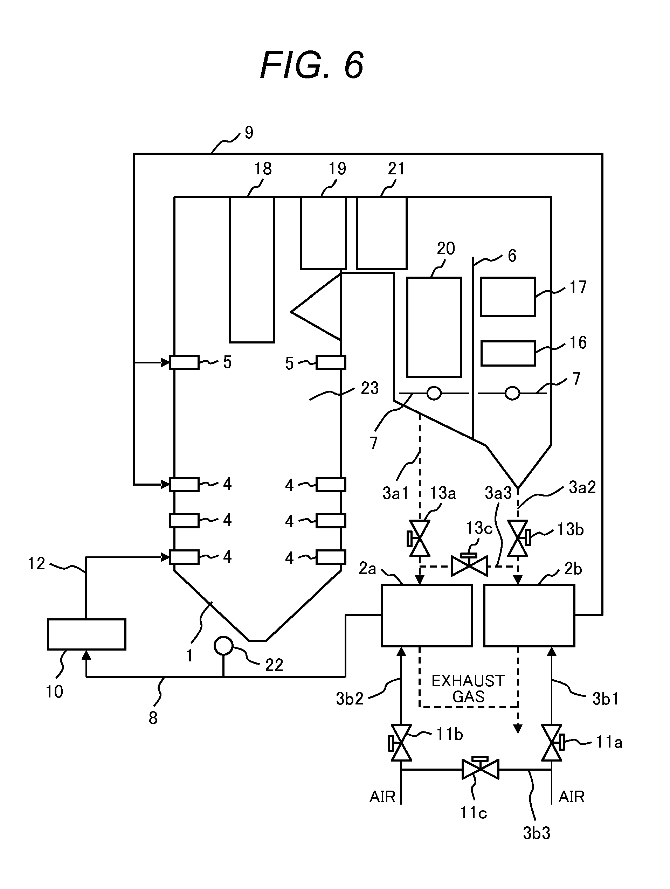

FIG. 6 shows the configuration of a coal-fired boiler according to a fourth embodiment of the present invention.

The boiler of the fourth embodiment includes many parts identical in operation to those used in the second embodiment. In the following, the boiler of the fourth embodiment will be described only with regard to what it differs from the boiler of the second embodiment. The parts of the boiler not described in the following are identical in operation and effects to those used in the second and third embodiments.

In the present embodiment shown in FIG. 6, the low-temperature air heater 2a and the high-temperature air heater 2b are provided as in the second embodiment. The present embodiment, however, differs from the second embodiment as follows: an air flow regulator 11a is coupled to the air duct 3b1; an air flow regulator 11b is coupled to the air duct 3b2; an air flow regulator 11c is coupled to an air communication duct 3b3 intercoupling the air duct 3b1 and the air duct 3b2; an exhaust gas flow regulator 13a is coupled to the exhaust gas duct 3a1, an exhaust gas flow regulator 13b is coupled to the exhaust gas duct 3a2; an exhaust gas flow regulator 13c is coupled to an exhaust gas communication duct 3a3 intercoupling the exhaust gas duct 3a1 and the exhaust gas duct 3a2; and an air thermometer 22 is coupled to the primary combustion air supply duct 8.

In the present embodiment, the air flow regulators 11a, 11b and 11c and the exhaust gas flow regulators 13a, 13b and 13c function to adjust the respective air flows and exhaust gas flows based on the output of the air thermometer 22 so as to keep the temperature measured by the air thermometer 22 of the primary combustion air passing through the primary combustion air supply duct 8 at a desired level.

The above-described configuration of the present embodiment also makes it possible to obtain the advantageous effects of the foregoing second embodiment. Furthermore, the present embodiment in which the air flow regulators 11a, 11b and 11c, the exhaust gas flow regulators 13a, 13b and 13c, and the air thermometer 22 are provided so as to keep the temperature of the primary air at a desired level can be flexibly applied to boilers using diversified kinds of coal.

While the present invention has been described with reference to its preferred embodiments, it is to be understood that the invention is not limited thereto but may be otherwise variously embodied within the scope of the invention. Typically, the embodiments have been described in detail so as to illustrate the present invention clearly, and the present invention is not limited to ones including all the described configurations. Substitution of part of a configuration of one embodiment with a configuration of another embodiment is possible; and addition of a configuration of one embodiment to a configuration of another embodiment is also possible. Additions, deletions, and substitutions of part of a configuration of an embodiment with or by another configuration can also be made.

### [Reference Signs List]

- 1: Boiler
- 2: Air heater
- 2a: Low-temperature air heater
- 2b: High-temperature air heater
- 3a1, 3a2: Exhaust gas duct
- 3a3: Exhaust gas communication duct
- 3b1, 3b2: Air duct
- 3b3: Air communication duct
- 4: Burner
- 5: Air port
- 6: Partition wall
- 7: Damper
- 8: Primary combustion air supply duct
- 9: Secondary combustion air supply duct
- 10: Coal mill
- 11a, 11b, 11c: Air flow regulator
- 12: Coal feeding pipe
- 13a, 13b, 13c: Exhaust gas flow regulator
- 15: De-NOx device
- 16: Economizer
- 17: Primary superheater
- 18: Secondary superheater
- 19: Final superheater
- 20: Primary reheater
- 21: Final reheater
- 22: Air thermometer
- 23: Furnace

## Claims

1. A boiler (1) comprising: a furnace (23) for burning solid fuel; a fuel mill (10) for pulverizing the solid fuel; a solid fuel feeding pipe (12) for conveying the solid fuel from the fuel mill (10) to the furnace (23); a burner (4) for igniting the solid fuel; an air port (5) for introducing air into the furnace (23) ; an air heater (2, 2a, 2b) for recovering heat from exhaust gas and heating primary air and secondary air to be supplied to the furnace (23); a primary combustion air supply duct (8) for introducing the primary air from the air heater (2, 2a) to the fuel mill (10) ; a secondary combustion air supply duct (9) for introducing the secondary air from the air heater (2, 2b) into the burner (4) and the air port (5); an air duct (3b1, 3b2) for introducing air into the air heater (2, 2a, 2b) ; an exhaust gas duct (3a1, 3a2, 3a3) for introducing exhaust gas into the air heater (2, 2a, 2b); a partition wall (6) for partitioning a downstream portion of a flow path for exhaust gas discharged from the furnace (23); and a plurality of heat exchangers (16, 17, 20) which are provided in the flow paths formed on both sides of the partition wall (6), recover heat from the exhaust gases flowing through the flow paths and heat steam using the recovered heat,
wherein the heat exchanger (16, 17, 20) provided in the flow path on a first side of the partition wall (6) has a smaller total heat transfer area than the heat exchanger (16, 17, 20) provided in the flow path on a second side of the partition wall (6); wherein the exhaust gases discharged from the flow paths to outside the boiler (1) are introduced, without being mixed, into the air heater (2, 2a, 2b) downstream of the boiler (1); and wherein, in the air heater (2, 2a, 2b), the heat of the exhaust gases is transferred to the primary air and the secondary air so as to heat combustion air.

2. The boiler according to claim 1,
wherein the exhaust gases discharged from the flow paths on the first side of the partition wall (6) and on the second side of the partition wall (6) to outside the boiler (1) are introduced into the air heater (2, 2a, 2b) via the exhaust gas ducts (3a1, 3a2) separately and respectively.

3. The boiler according to claim 1 or 2,
wherein the air heater (2, 2a, 2b) comprises a low-temperature air heater (2a) which is provided downstream of the heat exchanger (20) having a larger heat transfer area and which heats the primary air and a high-temperature air heater (2b) which is provided downstream of the heat exchanger (16, 17) having a smaller heat transfer area and which heats the secondary air.

4. The boiler according to one of claims 1 to 3,
wherein the heat exchanger having a larger heat transfer area is used to heat reheat steam and the heat exchanger having a smaller heat transfer area is used to heat main steam.

5. The boiler according to one of claims 3 and 4, further comprising a de-NOx device (15) which the exhaust gas flowing through the flow path provided with the heat exchanger (20) having a larger heat transfer area enters before passing through the low-temperature air heater (2a) and which removes nitrogen oxide contained in the exhaust gas,
wherein the secondary air enters, after being heated by the low-temperature air heater (2a), the high-temperature air heater (2b) to be heated therein by the exhaust gas flowing through the flow path provided with the heat exchanger (16, 17) having a smaller heat transfer area.

6. The boiler according to claim 5,
wherein, after entering the high-temperature air heater (2b) and being heat-exchanged therein, the exhaust gas flowing through the flow path provided with the heat exchanger (16, 17) having a smaller heat transfer area enters the de-NOx device (15) and, along with the exhaust gas flowing through the flow path provided with the heat exchanger (20) having a larger heat transfer area, has nitrogen oxide removed therein before entering the low-temperature air heater (2a).

7. The boiler according to one of claims 1 to 6,
wherein the air duct (3b1, 3b2, 3b3) is provided with an air flow regulator (11a, 11b, 11c), the exhaust gas duct (3a1, 3a2, 3a3) is provided with an exhaust gas flow regulator (13a, 13b, 13c), and the primary combustion air supply duct (8) is, at an intermediate portion thereof, provided with an air thermometer (22); and
wherein the air flow regulator (11a, 11b, 11c) and the exhaust gas flow regulator (13a, 13b, 13c) operate to adjust an air flow and an exhaust gas flow based on the output of the air thermometer (22) so as to keep the temperature measured by the air thermometer (22) of the primary combustion air flowing through the primary combustion air supply duct (8) at a desired level.
